# EUROPÄISCHE PATENTSCHRIFT

(11) **EP 3 700 321 B1**
(45) Veröffentlichungstag und Bekanntmachung des Hinweises auf die Patenterteilung: **25.01.2023**
(21) Anmeldenummer: 19832328.9
(22) Anmeldetag: 17.12.2019
(51) Int. Cl.: A01C 1/00, A01N 25/00, A01N 65/08, A01G 22/00, A01C 14/00

(54) **SAATGUTMISCHUNG UND ANBAUVERFAHREN**
SEED MIXTURE AND CULTIVATION METHOD
MÉLANGE DE SEMENCES ET PROCÉDÉ DE CULTURE

(30) Priorität: 21.12.2018 DE 102018133492
(43) Veröffentlichungstag der Anmeldung: 02.09.2020
(73) Patentinhaber: Agrodroi GmbH, 85132 Schernfeld (DE); Linke, Albert, 85132 Schernfeld (DE)
(72) Erfinder: LINKE, Albert, 85132 Schernfeld (DE)
(74) Vertreter: Canzler & Bergmeier Patentanwälte Partnerschaft mbB
(86) Internationale Anmeldenummer: PCT/EP2019/085693
(87) Internationale Veröffentlichungsnummer: WO 2020/127297

(56) Entgegenhaltungen:
- VEROMANN E ET AL: "Relative attractiveness of Brassica napus, Brassica nigra, Eruca sativa and Raphanus sativus for pollen beetle and their potential for use in trap cropping", ARTHROPOD-PLANT INTERACTIONS ; AN INTERNATIONAL JOURNAL DEVOTED TO STUDIES ON INTERACTIONS OF INSECTS, MITES, AND OTHER ARTHROPODS WITH PLANTS, SPRINGER NETHERLANDS, DORDRECHT, Bd. 6, Nr. 3, 18. April 2012 (2012-04-18), Seiten 385-394, XP035105501, ISSN: 1872-8847, DOI: 10.1007/S11829-012-9191-6
- LUULE METSPALU ET AL: "Flea beetle (Chrysomelidae: Alticinae) species composition and abundance in different cruciferous oilseed crops and the potential for a trap crop system", ACTA AGRICULTURAE SCANDINAVICA. SECTION B. SOIL AND PLANTSCIENCE, Bd. 64, Nr. 7, 3. Oktober 2014 (2014-10-03), Seiten 572-582, XP055671801, NO ISSN: 0906-4710, DOI: 10.1080/09064710.2014.933871
- SHELTON A M ET AL: "Concepts and applications of trap cropping in pest management", ANNUAL REVIEW OF ENTOMOLOGY, ANNUAL REVIEWS, US, Bd. 51, 1. Januar 2006 (2006-01-01), Seiten 285-308, XP002756181, ISSN: 0066-4170, DOI: 10.1146/ANNUREV.ENTO.51.110104.150959 [gefunden am 2005-08-03]
- TANJA BOHINC ET AL: "Sowing mixtures of Brassica trap crops is recommended to reduce Phyllotreta beetles injury to cabbage", ACTA AGRICULTURAE SCANDINAVICA. SECTION B. SOIL AND PLANTSCIENCE, Bd. 63, Nr. 4, 1. Mai 2013 (2013-05-01), Seiten 297-303, XP055671890, NO ISSN: 0906-4710, DOI: 10.1080/09064710.2012.752858
- HASSAN BARARI ET AL: "Effect of a turnip rape (Brassica rapa) trap crop on stem-mining pests and their parasitoids in winter oilseed rape (Brassica napus)", BIOCONTROL, KLUWER ACADEMIC PUBLISHERS, DO, Bd. 50, Nr. 1, 1. Februar 2005 (2005-02-01), Seiten 69-86, XP019230644, ISSN: 1573-8248, DOI: 10.1007/S10526-004-0895-0

## Beschreibung

Die vorliegende Erfindung betrifft eine Saatgutmischung mit Rapssamen wobei den Rapssamen als Pflanzenschutz zum Schutz gegen Insekten und Schnecken Samen von zumindest einer Opfer- und einer Vergällungspflanze aus der Familie der Kreuzblütengewächse beigemischt sind, sowie ein Anbauverfahren zum Schutz von Raps gegen Insekten und/oder Schnecken wobei neben Samen von Raps auch Samen von Opfer- und/oder Vergällungspflanzen aus der Familie der Kreuzblütengewächse ausgesät werden.

Aus der UA 89629 U sind eine Saatgutmischung sowie ein Anbauverfahren bekannt, mit welchen Insekten zum Bestäuben von Luzerne-Blüten angelockt werden sollen. Zu Beginn des Frühjahrs, wenn die Maschinen zum ersten Mal in ein Feld fahren können, wird eine Samenmischung in Form von Bändern mit einer Breite von 250 m um den Umfang des Feldes herum mit einer Sämaschine ausgesät. Die Samenmischung besteht aus Frühlingsraps und weißem Senf im Verhältnis von 1,2 zu 0,8. Es ist damit eine Möglichkeit geschaffen, die Attraktivität von Insektenbestäubern in der Luzerne zu verbessern. Auch wenn die Bestäubung hierdurch vorteilhaft beeinflusst sein mag, wird dadurch der Einsatz von Insektiziden nicht vermieden.

Aus der US 5,859,349 A sind Futterpflanzensamen zum Pflanzen auf einem Nahrungsmittelpflanzenfeld bekannt, die aus einer Mischung mit 97 bis 99 Volumenteilen eines Samens für eine Nahrungsmittelpflanze besteht, die genetisch so modifiziert wurde, dass sie eine Resistenz gegen Herbizide aufweist, die während des Wachstums aufgebracht werden. Auch hier kann die Vermeidung der Verwendung von Insektiziden nicht gewährleistet werden.

Die DE 41 15 493 A1 möchte die chemische Bekämpfung durch wiederholtes Spritzen mit Insektiziden entbehrlich machen. Hierfür wird mindestens ein ein Meter breiter Ackerblütenstreifen oder Ackergrünstreifen angelegt, der allseitig das Ackerfeld mit Kulturpflanzen umschließt und auf dem Phacelia, Buchweizen, Sonnenblumen, Malve, Senf, Raps, Gras oder Klee eingesät werden. Der Blüten- oder Grünstreifen bietet durch seinen Blütenreichtum in der Hauptvegetationszeit Mai bis September den sogenannten Nützlingen, d.h. Blattlausräubern optimale Lebensbedingungen.

Alle diese bekannten Maßnahmen bieten aber keine Lösung für die Bekämpfung von Schädlingen für Rapspflanzen. Vor allem der Rapsglanzkäfer, aber auch Schnecken, schädigen den Rapsanbau erheblich und führen zu beträchtlichen Einbußen bei der Ernte, wenn sie nicht bekämpft werden. Der mögliche Einsatz von Insektiziden verbietet sich aber bei einem ökologischen Anbau der Pflanze.

In dem Dokument VEROMANN E ET AL: "Relative attractiveness of Brassica napus, Brassica nigra, Eruca sativa and Raphanus sativus for pollen beetle and their potential for use in trap cropping", ARTHROPOD-PLANT INTERACTIONS ; AN INTERNATIONAL JOURNAL DEVOTED TO STUDIES ON INTERACTIONS OF INSECTS, MITES, AND OTHER ARTHROPODS WITH PLANTS, SPRINGER NETHERLANDS, DORDRECHT, Bd. 6, Nr. 3, 18. April 2012 (2012-04-18), Seiten 385-394, XP035105501, ISSN: 1872-8847, DOI: 10.1007/S11829-012-9191 -6 wird berichtet, dass Schwarzer Senf (Brassica nigra) als Fallenpflanze gegen Käfer eingesetzt werden kann. Schwarzer Senf wird dabei mit Rucola (Eruca sativa) und Rettich (Raphanus sativus) hinsichtlich der Wirksamkeit bezüglich der Bekämpfung von Pollenkäfern verglichen. In dem Dokument wird schließlich vorgeschlagen, dass eine Mischung von Schwarzer Senf (Brassica nigra) und Rettich (Raphanus sativus) gegen die Käfer helfen könnte. Da Rucola (Eruca sativa) und Rettich (Raphanus sativus) spätblühend sind und dementsprechend die gleiche Wirkung haben, können sie alternativ eingesetzt werden.

Die Druckschrift LUULE METSPALU ET AL: "Flea beetle (Chrysomelidae: Alticinae) species composition and abundance in different cruciferous oilseed crops and the potential for a trap crop system", ACTA AGRICULTURAE SCANDINAVICA. SECTION B. SOIL AND PLANTSCIENCE, Bd. 64, Nr. 7, 3. Oktober 2014 (2014-10-03), Seiten 572-582, XP055671801, NO ISSN: 0906-4710, DOI: 10.1080/09064710.2014.933871 vergleicht acht verschiedene kreuzblütige Ölsaatenpflanzen in Bezug auf die Bekämpfung von Flohkäfern (Chrysomelidae: Alticinae) miteinander. Untersuchungen in Bezug auf Rapsglanzkäfer (Brassicogethes aeneus) enthält dieses Dokument nicht.

SHELTON A M ET AL: "Concepts and applications of trap cropping in pest management", ANNUAL REVIEW OF ENTOMOLOGY, ANNUAL REVIEWS, US, Bd. 51, 1. Januar 2006 (2006-01-01 ), Seiten 285-308, XP002756181, ISSN: 0066-4170, DOI: 10.1146/ANNUREV.ENTO.51.110104.150959 [gefunden am 2005-08-03] schlägt das gleichzeitige Pflanzen verschiedener Pflanzenarten vor, um verschiedene Käfer zu bekämpfen. Ein Vorschlag zur Bekämpfung von Rapsglanzkäfern oder von Schnecken in Raps wird jedoch nicht gemacht.

In dem Dokument Tanja Bohinc ET AL: "Sowing mixtures of Brassica trap crops is recommended to reduce Phyllotreta beetles injury to cabbage", ACTA AGRICULTURAE SCANDINAVICA. SECTION B. SOIL AND PLANTSCIENCE, Bd. 63, Nr. 4, 1. Mai 2013 (2013-05-01), Seiten 297-303, XP055671890, NO ISSN: 0906-4710, DOI: 10.1080/09064710.2012.752858 wird berichtet, dass die gleichzeitige Aussaat von Ölrettich, weißem Senf und Ölraps als Mehrfachfangkulturen bei der Bekämpfung von Kohl-Flohkäfern in Kohl wirksam sein kann.

HASSAN BARARI ET AL: "Effect of a turnip rape (Brassica rapa) trap crop on stem-mining pests and their parasitoids in winter oilseed rape (Brassica napus)", BIOCONTROL, KLUWER ACADEMIC PUBLISHERS, DO, Bd. 50, Nr. 1, 1. Februar 2005 (2005-02-01), Seiten 69-86, XP019230644, ISSN: 1573-8248, DOI: 10.1007/S 10526-004-0895-0 beschreibt die Auswirkung einer Rübse-Fallenkultur auf Stengelbohrer-Schädlinge und ihre Parasitoide in Winterraps (Brassica napus). Es wird dabei die Bekämpfung des Großen Rapserdfloh (Psylliodes chrysocephalus) und des Gefleckten Kohltriebrüsslers (Ceutorhynchus pallidactylus) untersucht. Dabei wurde herausgefunden, dass Rübse, die in Ackerstreifen angepflanzt sind, die Besiedelung von Raps durch den Großen Rapserdfloh reduzieren kann. Dies gilt allerdings nicht für den Gefleckten Kohltriebrüssler.

Aufgabe der vorliegenden Erfindung ist es somit, dass der Rapsanbau einen hohen Ertrag erbringen kann und dabei ohne Anwendung von Insektiziden ökologisch, insbesondere bienenfreundlich, erfolgen kann.

Die Aufgabe wird gelöst durch eine Saatgutmischung mit Rapssamen sowie durch ein Anbauverfahren zum Schutz von Raps gegen Insekten und Schnecken mit den Merkmalen der unabhängigen Patentansprüche.

Die erfindungsgemäße Saatgutmischung weist hauptsächlich Rapssamen zur Aussaat von Raps auf. Den Rapssamen sind als Pflanzenschutz, insbesondere als Schutz gegen Insekten und/oder Schnecken, Samen von zumindest einer Opfer- und/oder Vergällungspflanze aus der Familie der Kreuzblütengewächse in einer Menge von jeweils 0,1 bis 15 Gewichts-% der gesamten Saatgutmischung beigemischt. Die Opferpflanzen sind dafür vorgesehen, dass die Insekten, insbesondere der Rapsglanzkäfer, diese Pflanzen befallen und die eigentliche Hauptfrucht der Saatgutmischung, nämlich den Raps, weitgehend unbefallen lassen. Die Vergällungspflanzen bewirken insbesondere durch Wurzelausscheidungen, dass beispielsweise Schnecken dem Raps fernbleiben.

Dadurch, dass die Opfer- und die Vergällungspflanze ebenso wie der Raps aus der Familie der Kreuzblütengewächse stammt, befallen die für Kreuzblütengewächse gefährlichen Insekten und Schnecken hauptsächlich die Opfer-und die Vergällungspflanzen und weniger den Raps. Insekten und Schnecken, welche von anderen Familien angezogen werden würden, bleiben dem Feld fern. So ist ein wirksamer, bienenfreundlicher und biologischer Anbau von Raps ermöglicht, der den Einsatz von Insektiziden vermeidet. Indem die Opfer- und/oder Vergällungspflanze in einer Menge von jeweils nur 0,1 bis 15 Gewichts-% der gesamten Saatgutmischung beigemischt ist, wird der Ertrag der Rapsernte auch nicht zu stark eingeschränkt.

Die Saatgutmischung ist für Raps aus Liniensorten oder Hybridsorten geeignet. Je nach Bedarf können auch mehrere verschiedene Opfer- oder Vergällungspflanzen Teil der Saatgutmischung sein.

Durch die Saatgutmischung wird das gesamte Feld mit Raps und mit Opfer-und/oder Vergällungspflanzen ausgesät. Damit wird ein flächendeckender Schutz des Rapses bewirkt. Nur das Säen eines Randstreifens des Feldes würde den Rapsglanzkäfer und andere Insekten nicht davon abhalten können auch das Hauptfeld mit dem Raps zu befallen.

Als besonders wichtig hat es sich herausgestellt, dass der Saatgutmischung neben den Samen von Raps als Opferpflanze auch Samen von Rübsen und/oder Ölrettich beigemischt sind. Diese Opferpflanzen aus der Familie der Kreuzblütengewächse werden von den Rapsglanzkäfern, Rapsstengelrüsslern oder auch von Kohlschotenrüsslern gegenüber dem Raps bevorzugt. Diese Insekten befallen somit hauptsächlich diese Opferpflanzen und verschonen den Raps.

Indem der Saatgutmischung neben den Samen von Raps und den Samen von Rübsen und Ölrettich, als Vergällungspflanze auch Samen von Senf beigemischt, so werden Schnecken von diesen Pflanzen ferngehalten, weil sie über ihre Wurzel Stoffe abscheiden, welche den Schnecken unangenehm sind. Die Schnecken meiden daher dieses Feld. Insbesondere beim Anbau von Winterraps hat die Senfpflanze zudem den Vorteil, dass sie abfriert und somit das Wachstum des Rapses im Frühjahr nicht behindert. Es hat sich herausgestellt, dass der im Frühjahr abgestorbene Senf zudem besonders förderlich für das Wachstum des Raps ist. Durch die abgestorbenen Senfpflanzen werden nämlich an dem Raps weniger Schäden, beispielsweise in Form von Pilzen, festgestellt. Auch ist hierdurch der Raps weniger interessant für weitere Schädlinge, wodurch er zudem geschützt ist.

Die erfindungsgemäße Kombination der Samen von Raps, Rübsen, Ölrettich und Senf in der erfindungsgemäßen Saatgutmischung hat eine besonders ertragreiche und schadarme Ernte des Raps ergeben.

Eine ganz besonders vorteilhafte Saatgutmischung ist dadurch gekennzeichnet, dass in der gesamten Saatgutmischung der Gewichts-%-Anteil der Samen der Opferpflanze höher ist als der Gewichts-%-Anteil der Samen der Vergällungspflanze. So kann beispielsweise der Gewichts-%-Anteil der Samen der Opferpflanze etwa doppelt so hoch sein wie der Gewichts-%-Anteil der Samen der Vergällungspflanze. Die individuelle Zusammensetzung einer optimalen Saatgutmischung kann von der aktuell zu erwartenden Bedrohung mit Insekten und Schnecken abhängig gemacht werden. Da die Bedrohung des Rapses durch die Insekten im Allgemeinen größer ist als durch die Schnecken, bietet es sich an, dass die Opferpflanzen einen höheren Anteil aufweisen als die Vergällungspflanzen.

Ist der Raps der Saatgutmischung vorzugsweise ein Winterraps, so ist die erfindungsgemäße Saatgutmischung besonders gut einsetzbar, da das Aufkommen der Insekten bzw. der Schnecken und deren Abwehr mit den Opfer- bzw. Vergällungspflanzen am besten zusammenfällt mit der kritischen Vegetationsperiode des Rapses.

Das erfindungsgemäße Anbauverfahren zum Schutz von Raps gegen Insekten und/oder Schnecken zeichnet sich dadurch aus, dass neben Samen von Raps auch Samen von Opfer- und Vergällungspflanzen aus der Familie der Kreuzblütengewächse in einer Menge von jeweils 0,1 bis 15 Gewichts-% der gesamten Saat ausgesät werden. Diese Aussaat erfolgt mit einer Saatgutmischung der vorherigen Ansprüche. Grundsätzlich ist es aber auch möglich, dass die Aussaat von Raps und die Aussaat der Opferpflanzen und/oder der Vergällungspflanzen individuell, insbesondere nacheinander erfolgt. Durch das Anbauen von speziellen Pflanzen, welche Insekten und/oder Schnecken von der eigentlichen Hauptfrucht, nämlich dem Raps, im Wesentlichen abhalten, wird die Hauptfrucht geschont und führt zu einem sehr guten Ertrag der Hauptfrucht bei der Ernte.

Dadurch, dass die Opferpflanzen und/oder die Vergällungspflanzen ebenso wie die Hauptfrucht aus der Familie der Kreuzblütengewächse stammen, werden dieselben Insekten und Schnecken angezogen bzw. vertrieben und verschonen die eigentliche Hauptfrucht. Die Menge der Opfer- und/oder Vergällungspflanzen von jeweils 0,1 bis 15 Gewichts-% der gesamten Saat kann individuell, je nach zu erwartendem Befall mit Insekten und Schnecken gewählt werden. Durch dieses erfindungsgemäße Anbauverfahren wird ein biologischer Anbau von Raps ermöglicht, bei dem das Spritzen von Insektiziden nicht mehr erforderlich ist.

Werden neben den Samen von Raps als Opferpflanze auch Samen von Rübsen und/oder Ölrettich ausgesät, so wird eine besonders gute Bekämpfung beispielsweise des Rapsglanzkäfers oder des Kohlschotenrüsslers erzielt. Rapsglanzkäfer und Kohlschotenrüssler befallen in erster Linie die Rübsen bzw. den Ölrettich. Der Raps wird dadurch weitgehend verschont und kann ertragreich wachsen.

Werden neben den Samen von Raps auch Samen von Senf als Vergällungspflanze ausgesät, so ist der im Frühjahr abgestorbene Senf zudem besonders förderlich für das Wachstum des Raps. Durch die abgestorbenen Senfpflanzen werden nämlich an dem Raps weniger Schäden, beispielsweise in Form von Pilzen, festgestellt. Auch ist hierdurch der Raps weniger interessant für weitere Schädlinge, wodurch er zudem geschützt ist. Die erfindungsgemäße Aussaat der Kombination der Samen von Raps, Rübsen, Ölrettich und Senf, entweder in der erfindungsgemäßen Saatgutmischung oder als einzelne Aussaat der Samen, hat eine besonders ertragreiche und schadarme Ernte des Raps ergeben. Insbesondere auch, wenn mit einem Befall von Schnecken gerechnet werden muss, ist die Beigabe von Senfsamen zu den Rapssamen vorteilhaft, weil die Wurzelausscheidungen der Senfpflanzen die Schnecken vertreiben. Die Kombination der Samen dieser vier Pflanzen wird dementsprechend zu dem überraschenden Ergebnis, dass nicht nur der Raps vor Befall geschützt wird, sondern zugleich sein Wachstum unterstützt wird.

Selbstverständlich ist es bei einem besonders starken Befall von Insekten und Schnecken auch möglich und kann es vorteilhaft sein, dass neben den Samen von Raps auch Samen von Rübsen, Ölrettich und Senf ausgesät werden.

Ein besonders vorteilhaftes Anbauverfahren besteht darin, dass mehr Gewichts-% Samen von Opferpflanzen als Gewichts-% Samen von Vergällungspflanzen ausgesät werden. Je nach zu erwartendem Befall mit Insekten und Schnecken kann es dementsprechend vorteilhaft sein, dass beispielsweise doppelt so viele Samen der Opferpflanzen im Vergleich zu den Samen der Vergällungspflanzen ausgesät werden.

Wird als Raps vorzugsweise ein Winterraps ausgesät, so wird eine besonders gute Wirkung der Abwehr von Insekten und/oder Schnecken bewirkt. Winterraps wird in der Regel Ende August ausgesät und keimt im Oktober oder November. Die Ernte erfolgt im darauffolgenden Sommer. Mit dem Schneckenbefall ist in den Monaten der Keimzeit zu rechnen. Insektenbefall erfolgt bei nicht geschützten Aussaaten im Frühjahr und Frühsommer. Winterraps wird dementsprechend durch das erfindungsgemäße Anbauverfahren besonders gut geschützt. Grundsätzlich ist das Anbauverfahren aber auch für Sommerraps geeignet.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der genannten Merkmale, auch wenn diese in unterschiedlichen Ausführungsbeispielen dargestellt und beschrieben sind.

## Patentansprüche

1. Saatgutmischung mit Rapssamen, wobei den Rapssamen als Pflanzenschutz zum Schutz gegen Insekten und Schnecken Samen von zumindest einer Opfer- und einer Vergällungspflanze aus der Familie der Kreuzblütengewächse beigemischt sind, wobei die Samen der Opfer- und der Vergällungspflanze in einer Menge von jeweils 0,1 bis 15 Gewichts-% der gesamten Saatgutmischung beigemischt sind, und der Saatgutmischung neben den Samen von Raps
- als Opferpflanze auch Samen von Rübsen und Ölrettich und
- als Vergällungspflanze auch Samen von Senf beigemischt sind.

2. Saatgutmischung nach dem vorherigen Anspruch, **dadurch gekennzeichnet, dass** in der gesamten Saatgutmischung der Gewichts-%-Anteil der Samen der Opferpflanze höher ist als der Gewichts-%-Anteil der Samen der Vergällungspflanze.

3. Saatgutmischung nach einem oder mehreren der vorherigen Ansprüche, **dadurch gekennzeichnet, dass** der Raps vorzugsweise ein Winterraps ist.

4. Anbauverfahren zum Schutz von Raps gegen Insekten und/oder Schnecken, wobei in einer Saatgutmischung nach einem oder mehreren der vorherigen Ansprüche neben Samen von Raps auch Samen von Opfer- und/oder Vergällungspflanzen aus der Familie der Kreuzblütengewächse ausgesät werden, wobei die Samen der Opfer- und der Vergällungspflanze in einer Menge von jeweils 0,1 bis 15 Gewichts-% der gesamten Saat ausgesät werden und
- neben den Samen von Raps
- als Opferpflanze Samen von Rübsen und Ölrettich und
- als Vergällungspflanze Samen von Senf ausgesät werden.

5. Anbauverfahren nach einem oder mehreren der vorherigen Ansprüche, **dadurch gekennzeichnet, dass** mehr Gewichts-% Samen von Opferpflanzen als Gewichts-% Samen von Vergällungspflanzen ausgesät werden.

6. Anbauverfahren nach einem oder mehreren der vorherigen Ansprüche, **dadurch gekennzeichnet, dass** als Raps vorzugsweise ein Winterraps ausgesät wird.

## Claims

1. A seed mixture having rapeseeds, seeds of at least one sacrificial and one denaturing plant from the cabbage family being added as pest control for protecting against insects and slugs, the seeds of the sacrificial and denaturing plant being added in a quantity of 0.1 to 15 wt% of the entire seed mixture,
and the seed mixture, in addition to the rapeseed,
- also has seeds of turnip rape and oil radish added as sacrificial plants, and
- also has mustard seeds added as a denaturing plant.

2. The seed mixture according to the preceding claim, **characterized in that** the weight % proportion of seeds of the sacrificial plant in the entire seed mixture is greater than the weight % proportion of seeds of the denaturing plant.

3. The seed mixture according to any one or more of the preceding claims, **characterized in that** the rapeseed is preferably a winter rapeseed.

4. A cultivation method for protecting rapeseed against insects and/or slugs, seeds of sacrificial and/or denaturing plants from the cabbage family being sown in addition to seeds of rapeseed in a seed mixture according to any one or more of the preceding claims, the seeds of the sacrificial and denaturing plant being sown in a quantity of 0.1 to 15 wt% of the entire seed mixture, and
- in addition to the seeds of rapeseed,
- seeds of turnip rape and oil radish also being sown as sacrificial plants, and
- mustard seeds being sown as a denaturing plant.

5. The cultivation method according to any one or more of the preceding claims, **characterized in that** a greater weight % of seeds of sacrificial plants are sown than the weight % of seeds of denaturing plants.

6. The cultivation method according to any one or more of the preceding claims, **characterized in that** a winter rapeseed is preferably sown as the rapeseed.

## Revendications

1. Mélange de semences avec des graines de colza, des graines d'au moins une plante sacrificielle et d'une plante dénaturante de la famille des crucifères étant mélangées aux graines de colza en tant que protection des plantes contre les insectes et les limaces, les graines de la plante sacrificielle et de la plante dénaturante étant mélangées en une quantité de 0,1 à 15 % en poids respectivement de l'ensemble du mélange de semences, et le mélange de semences contenant, outre les graines de colza,
- comme plante sacrificielle, également des graines de navette et de radis oléifère, et
- comme plante dénaturante, également des graines de moutarde.

2. Mélange de semences selon la revendication précédente, **caractérisé en ce que**, dans l'ensemble du mélange de semences, le pourcentage en poids des graines de la plante sacrificielle est supérieur au pourcentage en poids des graines de la plante dénaturante.

3. Mélange de semences selon l'une ou plusieurs des revendications précédentes, **caractérisé en ce que** le colza est de préférence un colza d'hiver.

4. Procédé de culture pour la protection du colza contre les insectes et/ou les limaces, dans lequel, dans un mélange de semences selon l'une quelconque ou plusieurs des revendications précédentes, outre des semences de colza, des semences de plantes sacrificielles et/ou de plantes dénaturantes de la famille des crucifères sont également semées, les semences de la plante sacrificielle et de la plante dénaturante étant semées en une quantité de 0,1 à 15 % en poids respectivement de la totalité des semences et, outre les semences de colza, on sème également
- comme plante sacrificielle, des graines de navette et de radis oléifère, et
- comme plante dénaturante, des graines de moutarde.

5. Procédé de culture selon l'une quelconque ou plusieurs des revendications précédentes, **caractérisé en ce que** l'on sème un pourcentage en poids plus élevé de graines de plantes sacrificielles que le pourcentage en poids de graines de plantes dénaturantes.

6. Procédé de culture selon l'une quelconque ou plusieurs des revendications précédentes, **caractérisé en ce qu'**un colza d'hiver est de préférence semé comme colza.
